# EUROPEAN PATENT SPECIFICATION

(11) **EP 1 153 327 B1**
(45) Date of publication and mention of the grant of the patent: **11.09.2002**
(21) Application number: 00908569.7
(22) Date of filing: 09.02.2000
(51) Int. Cl.: G02B 6/44

(54) **DEVICE FOR REMOVING TORSION IN OPTICAL FIBER RIBBONS**
ANORDNUNG ZUR BESEITIGUNG DER VERDREHUNG VON OPTISCHEN FASERBÄNDCHEN
DISPOSITIF PERMETTANT DE SUPPRIMER UNE TORSION DANS DES RUBANS DE FIBRES OPTIQUES

(30) Priority: 09.02.1999 IT MI990245
(43) Date of publication of application: 14.11.2001
(73) Proprietor: MINNESOTA MINING AND MANUFACTURING COMPANY, St. Paul, Minnesota 55133-3427 (US)
(72) Inventor: CICIRIELLO, Saverio, I-26010 Vaiano Cremasco (CR) (IT); CAROTI, Fabrizio, I-00166 Roma (IT)
(74) Representative: von Kirschbaum, Alexander, Dipl.-Ing.
(86) International application number: US0003363
(87) International publication number: WO00048031

(56) References cited:
- EP-A- 0 253 728
- DE-A- 4 438 668
- DE-A- 4 439 853
- US-A- 5 659 655
- US-A- 5 802 237
- KENJI YOSHIOKA ET AL: "THE DEVELOPMENT OF 300-FIBER LIGHT-WEIGHT OPTICAL FIBER CABLE AND RELATED TECHNOLOGIES FOR TRUNK NETWORKS" NTT REVIEW,JP,TELECOMMUNICATIONS ASSOCIATION, TOKYO, vol. 4, no. 4, 1 July 1992 (1992-07-01), pages 58-62, XP000310842
- PATENT ABSTRACTS OF JAPAN vol. 011, no. 239 (P-602), 6 August 1987 (1987-08-06) & JP 62 050806 A (OSAKA GAS CO LTD), 5 March 1987 (1987-03-05)

## Description

### Field of the Invention

The present invention relates to devices and methods for removing the residual torsion in optical-fiber ribbons of an optical fiber cable of the type used in the telecommunications industry.

### Background of the Invention

Optical fiber cables of the type commonly used in the telecommunications industry comprise a high number of optical fibers organized in ribbons (usually made up of four fibers each), where each ribbon typically groups the fibers associated with two specific users. The optical fiber ribbons are properly housed inside grooves (usually five superimposed ribbons per groove) located on the peripheral portion of a central core of the cable, and are externally sheathed with one or more layers of insulating and protective material.

The article "The development of 300-fibre Lightweight Optical Fiber Cable and Related Technologies for Trunk Networks" by Kanji Yoshioka et al., NTT Review 4(4), pp. 58-62 describes such optical fiber cables.

The grooves (usually five per cable) are angularly equidistant from one another, and they extend along the cable with a substantially helical progress. This configuration permits a relative displacement of the fibers with respect to each other, and with respect to central core of the cable, if the cable is subject to mechanical and/or thermal stresses. Such a configuration is advantageous in that the optical fibers are extremely delicate and are adversely affected by such stresses.

Optical fiber telecommunication networks are organized in a ring structure. The connection to the network is usually made after the line cable is laid. These connections are achieved through junctions which correspond with specific service areas provided along the ring line, and are usually sealed inside junction boxes.

For the purpose of allowing the connection of the various users to the communication network, the line cable must have, inside the junction boxes, some intermediate portions of fixed length (typically about five meters) in which the optical fiber cables are free from the external sheathing and the central core. This operation, commonly known as "cable peeling", must be carried out without interrupting the physical continuity of the fiber ribbons of the communication network, so as to allow the continuing transmission of the signal or signals along the entire ring line. Thus, in the portions of "peeled" cable located inside the junction boxes, the cable presents a plurality of intermediate portions of ribbon which extend uninterrupted from the grooves of the cable upstream from the junction box to the grooves of the cable downstream from the junction box. These portions are regularly collected in special housing units.

The intermediate portions of ribbon possess a residual torsion which arises from the helical progress of the grooves in which the ribbons upstream and downstream of the junction box are housed, and in which the same intermediate portions of ribbon were housed prior to the peeling of the cable. This residual torsion blocks the correct positioning on the housing units. Thus, it is necessary for the ribbons to have fixed-length portions which are free from residual torsion.

The prior art provides for the use of a comb-like tool provided with a plurality of longitudinal slots. Typically, the number of slots corresponds to the number of grooves on the optical-fiber cable. The comb is inserted between the ribbons inside the junction box, and is moved from one end of the junction box to the other. During the movement of the comb, the residual torsions are confined to the portions of ribbon downstream of the comb. Thus, the portions of ribbon downstream from the comb become increasingly piled up and twisted, even as the portions of ribbon upstream of the comb are freed from the residual torsion. At the end of the operation, there will be a skein of twisted ribbons downstream from the comb which is confined and enclosed in a space located at an end of the junction box. Due to the inherent fragility of the optical fibers within the ribbons (which, as noted above, do not endure mechanical stresses very well), the heaping of the ribbons in the skein can cause serious damage to the fibers, thereby adversely effecting the efficiency and quality of the signal transmission along the line.

There is thus a need in the art for a simple and effective method of removing the residual torsion in optical fiber ribbons which minimizes damage to the fibers and which therefore minimizes attenuation of the signal transmitted along the line. These and other needs are met by the present invention, as hereinafter described.

### Summary of the Invention

A method of removing the residual torsion in exposed portions of the optical fiber ribbon of an optical fiber cable, according to the invention, is defined in claim 1.

An optical fiber cable assembly, according to the invention, is defined in claim 8.

In one aspect, the present invention relates to a method and device for removing the residual torsion in the optical fiber ribbons of an optical fiber cable of the type commonly used in the telecommunications industry. Cables of this type typically comprise a central core, a plurality of substantially helical grooves located in the central core, a plurality of optical fiber ribbons located inside the grooves, and an external protective sheathing. The cable also typically comprises at least one intermediate section of fixed length, which includes portions of uncut ribbons that have been freed from the central core and from the external protective sheath, These portions of ribbon possess a residual torsion. In accordance with the present invention, a spool is provided which is adapted to be wound up with these portions of ribbons. In this way, the residual torsions of the optical-fiber ribbons are eliminated in an easy, practical and orderly manner without damaging the fibers or causing attenuation of the signal along the line.

During the installation of the network, the operator winds the ribbons onto the spool in a manner consistent with the helical pitch of the ribbons. The ribbons are neither cut nor interrupted. By use of the spool, the stress which the fibers are subjected to is minimized and is substantially lower than the stresses attendant to the prior art combing method. The use of the spool also eliminates any skein or entanglement of fibers inside the junction box, thus keeping the environment within the box cleaner and tidier and facilitating any inspection or maintenance operation thereon.

Preferably, the spool comprises a bottom plane, a guiding means for guiding the ribbon onto the spool, a ribbon housing means, and ribbon inlet and outlet openings to and from the guiding means and the ribbon housing means. Thus, the spool is extremely simple from the constructive point of view, and it can be readily produced from plastic materials by known molding processes.

The guiding and ribbon housing means preferably comprise first guiding walls which protrude perpendicularly from the bottom plane. The first guiding walls include a substantially circular central wall and have a fixed bending radius, and are also provided with a substantially annular peripheral wall which is concentric to the central wall. Thus, the ribbons are housed on a circular surface, and the housing is facilitated by the helical progress of the ribbons themselves. The bending radius of the central wall is preferably greater than some fixed minimum value. This protects the optical fibers within the ribbons from possible bending during installation and maintenance.

The ribbon inlet and outlet openings preferably comprise second guiding walls which protrude perpendicularly from the bottom plane. These walls include a substantially rectilinear base wall and upper walls that are substantially parallel to the base wall, and are radiused to the peripheral wall of the guiding means and the ribbon housing means. This design facilitates the introduction and extraction of the ribbons from the spool. Preferably, the spool is also devoid of any edges or acute angles which could damage the fibers.

The device of the present invention also preferably comprises holding means for holding the ribbons in position in the guiding means and the ribbon housing means. Such holding means advantageously comprises retaining tabs which protrude perpendicularly from the central wall and are substantially parallel to the bottom plane. The tabs are preferably interspaced from one another by about 90°. As a result, the positioning of the ribbons on the spool is extremely easy and safe. In the preferred embodiment, the positioning is further facilitated by the presence of notches on both the base and the peripheral wall which correspond with the tabs. The device of the present invention also preferably comprises means for clamping the spool to a support plane so as to ensure a safe positioning of the spool inside the junction box.

In another aspect, the present invention relates to a method for removing the residual torsion in optical fiber ribbons of an optical fiber cable of the type used in the telecommunications industry. The cable comprises a central core, a plurality of substantially helical grooves located in the central core, a plurality of optical fiber ribbons located inside the grooves, and an external protective sheathing. In accordance with the method, the central core and the protective sheathing is removed from a segment of the cable without cutting the ribbons, thereby freeing portions of the ribbons from the central core and from the protective sheathing. These portions of ribbon possess a residual torsion. Then, at least a portion of the ribbons are wound up onto a spool. Preferably, the spool-winding step comprises the step of winding the portions onto the spool so as to obtain the desired length of portions of ribbons which are free from residual torsion at a point downstream from the spool.

Further features and advantages of the present invention will appear more clearly from the following detailed description of the preferred embodiment, which description is made with reference to the attached drawings.

### Description of the Drawings

FIG. 1 shows a perspective view of a partly sectioned optical-fiber cable;
FIG. 2 shows a schematic view of the device of the invention in an operative configuration;
FIG. 3 shows an enlarged front perspective view of the device of FIG. 2; and
FIG. 4 shows an enlarged perspective view from rear of the device of Figure 2.

### Detailed Description of the Invention

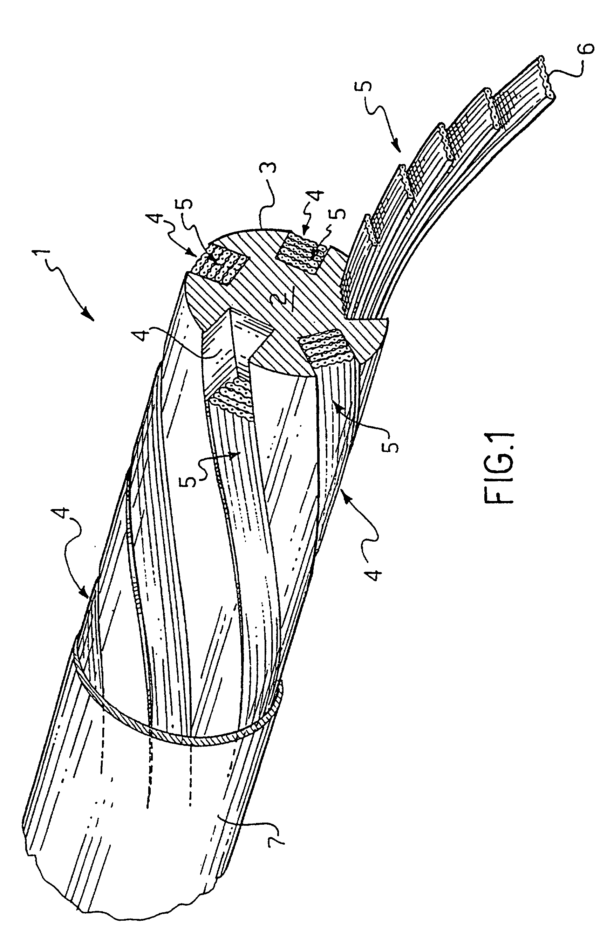

With reference to FIG. 1, an optical fiber cable **1** is shown of the type commonly used in the telecommunications industry for optical fiber communication networks. The cable comprises a central core **2,** on the peripheral portion **3** of which there is a plurality (five in the specific example) of substantially helical grooves **4** (usually having a helical pitch of about half a meter) which are angularly equidistant from one another. The grooves loosely house a plurality (five in the specific example) of superimposed optical fiber ribbons **5.** Each ribbon comprises four optical fibers **6** which are placed adjacent to each other and are properly insulated from one another. The cable further comprises an external protective sheathing **7** adapted to insulate the cable from the external environment.

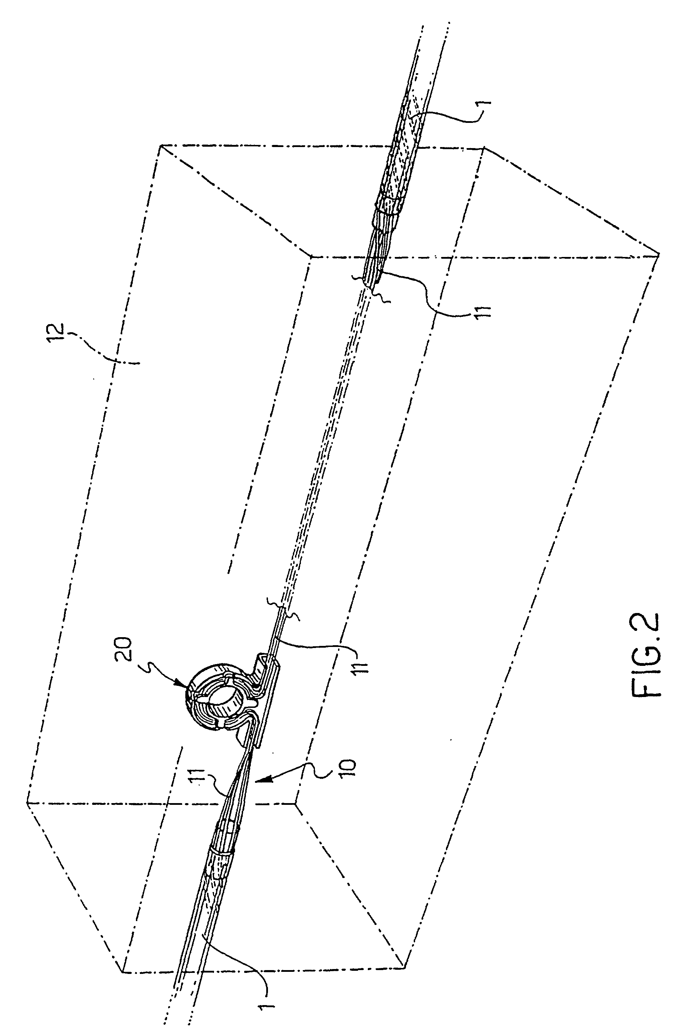

As shown schematically in FIG. 2, the cable comprises segments **10** of fixed length (typically of about five meters) of "peeled" cable, that is to say, lengths of cable in which the ribbons of optical fiber have been freed from the external sheathing and from the central core without being cut or without otherwise interrupting the physical continuity of the ribbons. The length of peeled cable includes portions **11** of exposed ribbon which are typically housed inside sealed junction boxes **12.** Such boxes are placed along the line wherever there is a portion of peeled cable.

As seen in FIG. 2, the portions of exposed ribbon possess a residual torsion due to the helical orientation of the grooves in the optical fiber cable (see FIG. 1) in which the ribbons are housed upstream and downstream of the junction box **12**, and in which the same exposed portions of ribbon were housed before the cable was peeled. This residual torsion is removed by a spool **20** which is adapted to be wounded up with a portion of the exposed ribbons. The spool can be made, for example, by molding a suitable plastic material, such as nylon, into the proper shape using well known molding techniques.

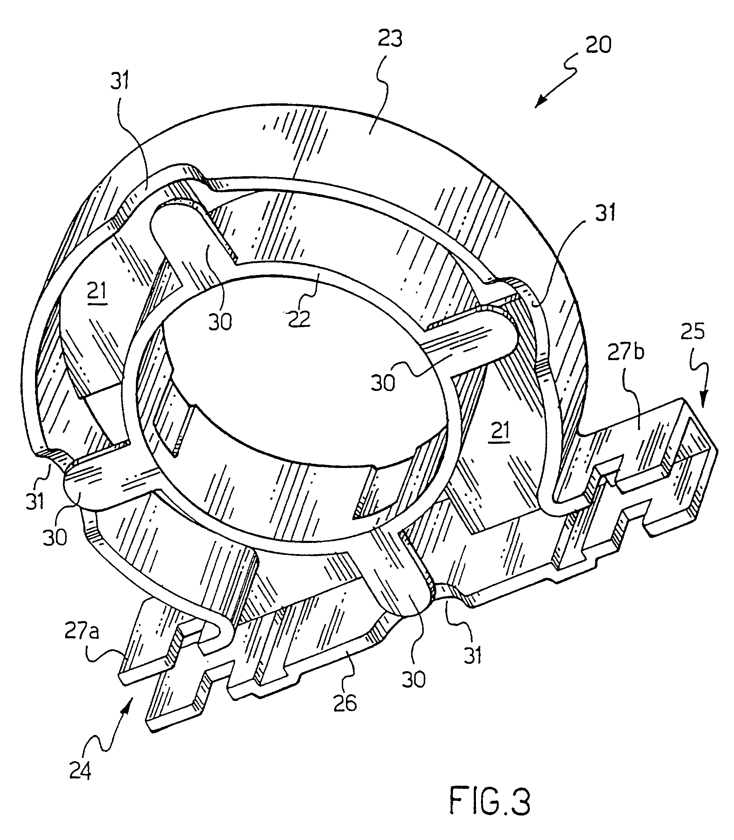

With reference to FIG. 3, the spool comprises an annular bottom plane **21** which is bounded by a central guiding wall **22** and a peripheral guiding wall **23.** The peripheral guiding wall is concentric to the central guiding wall and protrudes perpendicularly from the bottom plane. The walls **22** and **23** collectively define a guiding and housing seat for the portions of ribbons disposed in the spool. The central wall has a fixed bending radius (e.g., 30 mm) which is selected to protect the optical fibers within the ribbons against possible bending during installation and maintenance.

The spool also comprises ribbon inlet **24** and outlet **25** openings to and from the guiding means and the ribbon housing. The ribbon inlet and outlet openings comprise a substantially rectilinear base wall **26** which perpendicularly protrudes from the bottom plane **21,** and upper walls **27a, 27b** that are substantially parallel to the base wall and are connected to the peripheral wall **23.**

Retaining tabs **30** protrude perpendicularly from the central wall **22** of the spool and are substantially parallel to the bottom plane **21.** These tabs allow the ribbons to be retained in position inside the spool. The tabs are interspaced from one another by about 90°.

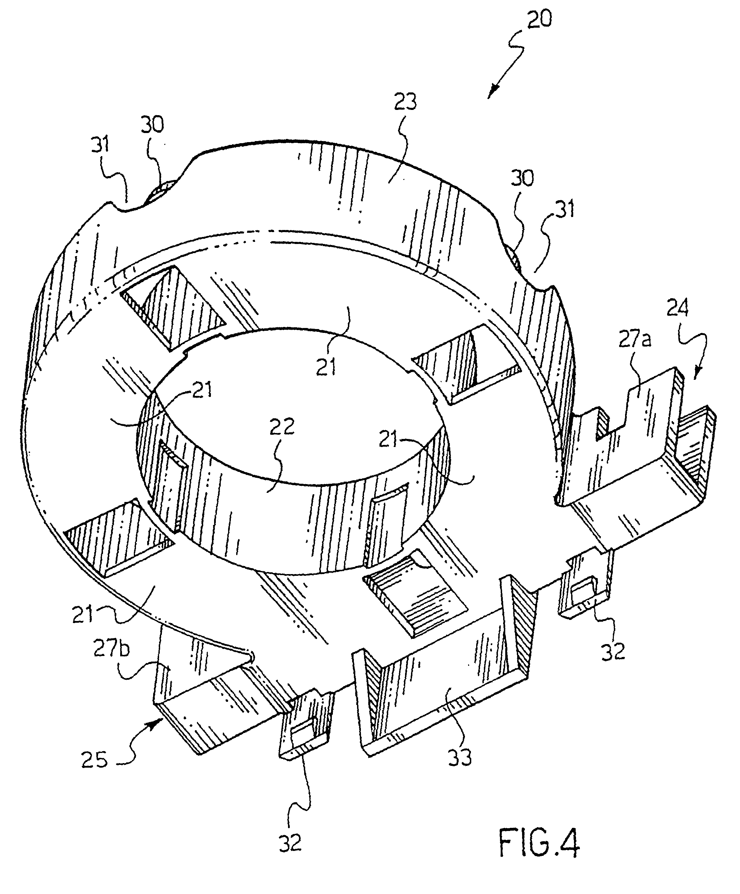

On the peripheral wall **23** and on the base wall **26** there are, in correspondence with the tabs **30,** respective notches **31** adapted to facilitate the fitting of the ribbons inside the spool. As seen in FIG. 4, the base wall **26** also comprises tongues **32** and **33** for the clamping and positioning of the spool to a support plane in the junction box.

While laying the cable, the operator can very easily and practically wind up a portion of the exposed ribbon on the spool in a manner consistent with their helical disposition. In this way, the portions of ribbon downstream from the spool are freed from the residual torsion and are ready for possible future connection. Any desired length of ribbon free from residual torsion can be obtained by further twisting of the spool. The portions of ribbon free from residual torsion are then housed in a conventional manner on special housing units.

## Claims

1. A method of removing the residual torsion in exposed portions of the optical fiber ribbon of an optical fiber cable, comprising the steps of:
providing a length of optical fiber cable (1) comprising (a) a central core (2), (b) a plurality of optical fiber ribbons (5) disposed helically about the core (2) and (c) an external sheathing (7) disposed over the core (2) and the optical fiber ribbons (5);
removing the core (2) and the sheathing (7) from an intermediate portion of the length of cable (1) without cutting the ribbons (5), such that the ribbons possess a residual torsion; and
winding up at least a portion of the ribbons (5) onto a spool (20), such that the residual torsion is removed.

2. The method of claim 1, wherein the ribbons (5) are twisted as they are wound up on the spool (20).

3. The method of claim 1, wherein the cable (1) further comprises a plurality of grooves (4) disposed helically on the surface of the core (2), and wherein the ribbons (5) are disposed within the grooves (4).

4. The method of claim 1, wherein the spool (20) comprises a first surface (21) having first and second concentric walls (22,23) extending perpendicularly therefrom.

5. The method of claim 4, wherein the first surface (21) is substantially planar.

6. The method of claim 4, wherein at least one of said first and second walls (22,23) further comprises a plurality of tabs (30) extending therefrom, and wherein said tabs (30) are substantially parallel to said first surface (21).

7. The method of claim 6, further comprising a second surface which is substantially parallel to said first surface (21).

8. An optical fiber cable assembly, comprising:
an optical fiber cable (1) comprising a central core (2), a plurality of optical fiber ribbons (5) and a sheathing (7), wherein said ribbons are helically disposed about the core (2) and are covered by the sheathing (7) in a first and third portion of the cable but are devoid of the core (2) and sheathing (7) in a second portion of the cable disposed between said first and third portions; and
a spool (20), in contact with said second portion, having at least a portion of said ribbons (5) wound round a surface (21) thereof, such that said ribbons have no residual torsion.

9. The optical fiber cable assembly of claim 8, wherein said core (2) has a plurality of substantially helical grooves (5) disposed thereon, and wherein said plurality of optical fiber ribbons (5) are disposed inside said grooves (5).

10. The optical fiber cable assembly of claim 8, wherein said spool comprises a bottom plane (26), a guiding means for guiding said ribbon onto the spool, a ribbon housing means, and ribbon inlet (24) and outlet (25) openings to and from the guiding means and the ribbon housing means.

11. The optical fiber cable assembly of claim 10, wherein said guiding means and said ribbon housing means comprise first guiding walls protruding perpendicularly from said bottom plane, said first guiding walls including a substantially circular central guiding wall (22) having a fixed bending radius and a substantially annular peripheral guiding wall (23) which is concentric to the central wall.

12. The optical fiber cable assembly of claim 11, wherein the ribbon inlet (24) and outlet (25) openings comprise second guiding walls which protrude perpendicularly from the bottom plane, said second walls including a substantially rectilinear base wall and upper walls (27a,27b) that are substantially parallel to the base wall (26) and which are radiused to the peripheral wall of the guiding means and of the ribbon housing.

13. The optical fiber cable assembly of claim 10, said assembly further comprising holding means (30) for holding the ribbons in position within in the guiding means and the ribbon housing means.

14. The optical fiber cable assembly of claim 13, wherein said holding means comprises retaining tabs (30) which protrude perpendicularly from said central guiding wall (22) and which are substantially parallel to said bottom plane (26).

15. The optical fiber cable assembly of claim 14, wherein said tabs (30) are interspaced from one another by about 90°.

16. The optical fiber cable assembly of claim 13, wherein both said peripheral and the base walls comprise, in correspondence with said tabs, respective notches (31) adapted to facilitate the housing of the ribbons inside the spool.

17. The optical fiber cable assembly of claim 8, said cable further comprising clamping means (32) for clamping said spool to a support plane.

## Patentansprüche

1. Verfahren zum Entfernen der Resttorsion in freiliegenden Teilen des Optikfaserbands eines Optikfaserkabels, mit folgenden Schritten:
Bereitstellen einer Länge eines Optikfaserkabels(1) mit (a) einem zentralen Kern (2), (b) mehreren spiralförmig um den Kern (2) angeordneten Optikfaserbändern (5) und (c) einer über dem Kern (2) und den Optikfaserbändern (5) angeordneten äußeren Ummantelung (7);
Entfernen des Kerns (2) und der Ummantelung (7) von einem Zwischenteil der Länge des Kabels (1) ohne Durchschneiden der Bänder (5), so dass die Bänder eine Resttorsion aufweisen; und
Aufwickeln mindestens eines Teils der Bänder (5) auf eine Spule (20), so dass die Resttorsion entfernt wird.

2. Verfahren nach Anspruch 1, bei dem die Bänder (5) beim Aufwickeln auf die Spule (20) verdreht werden.

3. Verfahren nach Anspruch 1, bei dem das Kabel (1) ferner mehrere spiralförmig auf der Fläche des Kerns (2) ausgebildete Nuten (4) aufweist und bei dem sich die Bänder (5) in den Nuten (4) befinden.

4. Verfahren nach Anspruch 1, bei dem die Spule (20) eine erste Fläche (21) mit rechtwinklig davon abstehenden ersten und zweiten konzentrischen Wänden (22,23) aufweist.

5. Verfahren nach Anspruch 4, bei dem die ersten Fläche (21) im wesentlichen planar ist.

6. Verfahren nach Anspruch 4, bei dem mindestens eine der ersten und zweiten Wände (22,23) ferner mehrere davon vorstehende Vorsprünge (30) aufweist und bei dem die Vorsprünge (30) im wesentlichen parallel zu der ersten Fläche (21) verlaufen.

7. Verfahren nach Anspruch 6, ferner mit einer zweiten Fläche, die im wesentlichen parallel zu der ersten Fläche (21) verläuft.

8. Optikfaserkabelanordnung mit:
einem Optikfaserkabel (1) mit einem zentralen Kern (2), mehreren Optikfaserbändern (5) und einer Ummantelung (7), wobei die Bänder in einem ersten und einem dritten Teil des Kabels spiralförmig um den Kern (2) angeordnet und von der Ummantelung (7) abgedeckt sind, jedoch in einem zwischen den ersten und dritten Teilen angeordneten zweiten Teil des Kabels keinen Kern (2) und keine Ummantelung (7) aufweisen, und
eine mit dem zweiten Teil in Kontakt stehende Spule (20), bei der mindestens ein Teil der Bänder (5) um eine Fläche (21) gewickelt ist, so dass die Bänder keine Resttorsion aufweisen.

9. Optikfaserkabelanordnung nach Anspruch 8, bei der der Kern (2) mehrere im wesentlichen spiralförmige Nuten (4) aufweist und bei der die mehreren Optikfaserbänder (5) in den Nuten (4) angeordnet sind.

10. Optikfaserkabelanordnung nach Anspruch 8, bei der die Spule eine untere Ebene (26), eine Führungseinrichtung zum Führen des Bands auf die Spule, eine Bandgehäuseeinrichtung und Bandeinlass- (24) und -auslass- (25) Öffnungen zu und von der Führungseinrichtung und der Bandgehäuseeinrichtung aufweist.

11. Optikfaserkabelanordnung nach Anspruch 10, bei der die Führungseinrichtung und die Bandgehäuseeinrichtung erste von der unteren Ebene vorstehende Führungswände aufweisen, die eine im wesentlichen kreisförmige zentrale Führungswand (22) mit einem festen Biegeradius und eine im wesentlichen ringförmige periphere Führungswand (23) umfassen, die mit der zentralen Wand konzentrisch ist.

12. Optikfaserkabelanordnung nach Anspruch 11, bei der die Bandeinlass- (24) und -auslass- (25) Öffnungen rechtwinklig von der unteren Ebene vorstehende zweite Führungswände aufweisen, die eine im wesentlichen geradlinige Basiswand und obere Wände (27a,27b) umfassen, die im wesentlichen parallel zu der Basiswand (26) verlaufen und deren Radius dem der Umfangswand der Führungseinrichtung und des Bandgehäuses entspricht.

13. Optikfaserkabelanordnung nach Anspruch 10, ferner mit einer Halteeinrichtung (30) zum Halten der Bänder in ihrer Position in der Führungseinrichtung und der Bandgehäuseeinrichtung.

14. Optikfaserkabelanordnung nach Anspruch 13, bei der die Halteeinrichtung Festhaltevorsprünge (30) aufweist, die rechtwinklig von der zentralen Führungswand (22) vorstehen und die im wesentlichen parallel zu der unteren Ebene (26) verlaufen.

15. Optikfaserkabelanordnung nach Anspruch 14, bei der die Vorsprünge (30) um ungefähr 90° voneinander beabstandet sind.

16. Optikfaserkabelanordnung nach Anspruch 13, bei der sowohl Umfangsals auch Basiswände jeweils den Vorsprüngen entsprechende Auskerbungen (31) aufweisen, die das Aufnehmen der Bänder in die Spule vereinfachen.

17. Optikfaserkabelanordnung nach Anspruch 8, bei der das Kabel ferner eine Klemmeinrichtung (32) zum Anklemmen der Spule an einer Stützebene aufweist.

## Revendications

1. Procédé de suppression de la torsion résiduelle dans des parties exposées du ruban de fibres optiques d'un câble à fibres optiques, comprenant les étapes consistant à :
fournir une longueur de câble à fibres optiques (1) comprenant (a) un noyau central (8), (b) une pluralité de rubans à fibres optiques (5) disposés de manière hélicoïdale autour du noyau (8), et (c) une enveloppe externe (7) disposée au-dessus du noyau (8) et des rubans de fibres optiques (5) ;
retirer le noyau (8) et l'enveloppe (7) d'une partie intermédiaire de la longueur de câble (1) sans couper les rubans (5), de façon que les rubans possèdent une torsion résiduelle ; et
enrouler au moins une partie des rubans (5) sur une bobine (20), de façon que la torsion résiduelle soit supprimée.

2. Procédé selon la revendication 1, dans lequel les rubans (5) sont torsadés à mesure qu'ils sont enroulés sur la bobine (20).

3. Procédé selon la revendication 1, dans lequel le câble (1) comprend en outre une pluralité de rainures (4) disposées de manière hélicoïdale sur la surface du noyau (2) et dans lequel les rubans (5) sont disposés dans les rainures (4).

4. Procédé selon la revendication 1, dans lequel la bobine (20) comprend une première surface (21) possédant une première et une seconde paroi concentriques (22, 23) s'étendant perpendiculairement à partir de celle-ci.

5. Procédé selon la revendication 4, dans lequel la première surface (21) est sensiblement plane.

6. Procédé selon la revendication 4, dans lequel au moins l'une desdites première et seconde surfaces (22, 23) comprend en outre une pluralité de pattes (30) s'étendant à partir de celles-ci est dans lequel lesdites pattes (30) sont sensiblement parallèles à ladite première surface (21).

7. Procédé selon la revendication 6, comprenant en outre une seconde surface sensiblement parallèle à ladite première surface (21).

8. Montage de câble à fibres optiques comprenant :
un câble à fibres optiques (1) comprenant un noyau central (8), une pluralité de rubans à fibres optiques (5), et une enveloppe (7), dans lequel lesdits rubans sont disposés de manière hélicoïdale autour du noyau (2) et sont recouverts par l'enveloppe (7) dans une première et une troisième partie du câble mais sont dépourvus du noyau (2) et de l'enveloppe (7) dans une deuxième partie du câble disposée entre lesdites première et troisième parties ; et
une bobine (20) en contact avec ladite deuxième partie, ayant au moins une partie desdits rubans (5) enroulée autour d'une surface (21) de celle-ci, de façon que lesdits rubans n'aient pas de torsion résiduelle.

9. Montage de câble à fibres optiques selon la revendication 8, dans lequel ledit noyau (2) comporte une pluralité de rainures sensiblement hélicoïdales (5) disposées sur celui-ci est dans lequel ladite pluralité de rubans de fibres optiques (5) sont disposés dans lesdites rainures (5).

10. Montage de câble à fibres optiques selon la revendication 8, dans lequel ladite bobine comprend un plan inférieur (26), un moyen de guidage pour guider ledit ruban sur la bobine, un moyen de logement de ruban et des ouvertures d'entrée (24) et de sortie (25) de rubans vers et depuis le moyen de guidage et le moyen de logements de ruban.

11. Montage de câble à fibres optiques selon la revendication 10, dans lequel ledit moyen de guidage et ledit moyen de logement de rubans comprennent des premières parois de guidage faisant saillie perpendiculairement par rapport audit plan inférieur, lesdites premières parois de guidage comportant une paroi de guidage centrale sensiblement circulaire (22) ayant un rayon de courbure fixe et une paroi de guidage périphérique sensiblement annulaire (23) concentrique par rapport à la paroi centrale.

12. Montage de câble à fibres optiques selon la revendication 11, dans lequel les ouvertures d'entrée (24) et de sortie (25) de rubans comprenne des secondes parois de guidage faisant saillie perpendiculairement par rapport au plan inférieur, lesdites secondes parois comportant une paroi de base sensiblement rectiligne et des parois supérieures (27a, 27b) qui sont sensiblement parallèles à la paroi de base (26) et qui rayonnent vers la paroi périphérique du moyen de guidage et du logement de ruban.

13. Montage de câble à fibres optiques selon la revendication 10, ledit montage comprenant en outre un moyen de maintien (30) pour maintenir les rubans en position dans le moyen de guidage et le moyen de logement de ruban.

14. Montage de câble à fibres optiques selon la revendication 13, dans lequel ledit moyen de maintien comprend des pattes de retenue (30) faisant saillie perpendiculairement par rapport à ladite paroi de guidage central (22) et qui sont sensiblement parallèles audit plan inférieur (26).

15. Montage de câble à fibres optiques selon la revendication 14, dans lequel lesdites pattes (30) sont mutuellement espacées les unes des autres d'environ 90°.

16. Montage de câble à fibres optiques selon la revendication 13, dans lequel lesdites parois à la fois périphérique et de base comprennent, en correspondance avec lesdites pattes, des encoches respectives (31) adaptées pour faciliter le logement des rubans à l'intérieur de la bobine.

17. Montage de câble à fibres optiques selon la revendication 8, ledit câble comprenant en outre des moyens de fixation (32) pour fixer ladite bobine sur un plan support.
